# EUROPEAN PATENT APPLICATION

(11) **EP 4 404 393 A1**
(43) Date of publication of application: **24.07.2024**
(21) Application number: 23152498.4
(22) Date of filing: 19.01.2023
(51) Int. Cl.: H01R 13/426, H01R 13/436, H02B 11/04, H01R 13/14

(54) **CONNECTING DEVICE**

(71) Applicant: ABB Schweiz AG, 5400 Baden (CH)
(72) Inventor: SANTARELLO, Francesco, I-24127 Bergamo (IT); RIZZI, Romeo, I-24030 Mozzo (BG) (IT)
(74) Representative: De Bortoli, Eros

(57) **Abstract**

Connecting device for connecting electrically and mechanically a movable conductive terminal of a first electrical system to a stationary conductor of a second electrical system. The connecting device comprises:
- a conductive support body configured to be fixed to said movable conductive terminal;
- a plier assembly mounted on said support body and defining a coupling cavity configured to receive said stationary conductor;
- an elastic bracket element configured to secure said plier assembly to said support body. Said bracket element is arranged in said clamping cavity and it has lateral legs sticking out of said camping cavity and mechanically connected to said support body.

## Description

### Field of the invention

The present invention relates to the field of low and medium voltage electrical systems. More particularly, the present invention concerns a connecting device of the plier type, which is adapted to connect electrically and mechanically a movable conductive terminal of a first electrical system to a stationary conductor of a second electrical system.

### Background art

As is known, connecting devices of the plier type are widely used in low and medium voltage switching apparatuses (for example circuit breakers), particularly in switching apparatuses of the withdrawable type.

Typically, in these applications, a connecting device of the plier type is fixed to each contact arm of the switching apparatus to connect electrically and mechanically, in a removable manner, the contact arms to corresponding busbars of a switchgear or an electric line.

Each connecting device comprises an electrically conductive support body, which is fixed to the corresponding contact arm, and a plier assembly, which is mounted on said support body. Traditional connecting devices of the plier type have some technical limitations, which basically concern the way in which the plier assembly is secured to the support body.

In principle, it would be possible to fix the plier assembly to the support body by means of screws. However, this solution would make relatively difficult and time consuming a possible substitution of the plier assembly during a maintenance intervention.

In some connecting devices of the state of the art, the plier assembly is secured to the support body through multiple connecting clips, for example by a pair of connecting clips arranged in parallel to the plier groups and having each opposite ends coupled to a corresponding support plate of the plier groups and to a corresponding portion of the support body, respectively. However, such connecting clips are often difficult to handle manually. The installation of the plier assembly may therefore be relatively time-consuming and subject to positioning errors. Additionally, it has been experienced that these connecting clips, even when correctly mounted, often disengage from their operating position, particularly when the connecting device is decoupled from the related busbar during an extraction manoeuvre of the switching apparatus. Obviously, such an undesired event may cause a partial or full detachment of the plier assembly from the support body, which may require relatively complex maintenance interventions on the switching apparatus and on the busbars.

### Summary of the invention

The main aim of the present invention is to provide a connecting device of the plier type that allows solving or mitigating the above-mentioned technical problems.

More particularly, it is an object of the present invention to provide a connecting device, which ensures high level performances in terms easiness of installation and reliability in use. Another object of the present invention is to provide a connecting device, in which the plier assembly can be easily substituted during a maintenance intervention.

Another object of the present invention is to provide a connecting device relatively easy to manufacture at industrial level, at competitive costs compared to the available solutions of the state of the art.

In order to fulfill these aim and objects, the present invention provides a connecting device, according to the following claim 1 and the related dependent claims.

In a general definition, the connecting device of the invention is configured to connect electrically and mechanically a movable conductive terminal of a first electrical system to a stationary conductor of a second electrical system.

The connecting device, according to the invention, comprises a conductive support body, which is configured to be fixed to said movable conductive terminal, and a plier assembly mounted on said support body and projecting from said support body in parallel to a first axis. Said plier assembly defines a coupling cavity, which is configured to receive said stationary conductor. Said coupling cavity extends along said first axis and along a second axis perpendicular to said first axis.

Said plier assembly comprises opposite first and second plier groups arranged in parallel to said second axis and spaced one from another in such a way to delimit said coupling cavity at opposite sides parallel to said second axis.

Each plier group includes a plurality of conductive contact fingers adjacent and parallel one to another.

According to the invention, the connecting device comprises an elastic bracket element configured to secure said plier assembly to said support body.

Said bracket element comprises an elongated intermediate portion and a pair of lateral legs extending transversally relative to said intermediate portion.

Said bracket element is arranged in said clamping cavity with said intermediate portion extending in parallel to said second axis and said lateral legs sticking out of said camping cavity at opposite open ends of said clamping cavity and directed towards said support body.

Each lateral leg of said bracket element is mechanically connected to said support body.

Said bracket element is elastically deformed upon the mechanical connection to said support body and it thus exerts, on said plier assembly, a mechanical force directed in such a way to urge said plier assembly against said support body.

Preferably, each lateral leg of said bracket element is mechanically connected to said support body without the use of screws or similar fastening elements.

According to some embodiments of the invention, each lateral leg of said bracket element is mechanically connected to said support body through a pin mechanical connection. Preferably, each lateral leg of said bracket element is provided with a connection pin protruding towards the other lateral leg of said bracket element. Each connection pin is inserted into a corresponding hole of said support body.

Preferably, said bracket element has a C-shaped profile.

According to some embodiments of the invention, each lateral leg of said bracket element has a rectilinear profile.

According to other embodiments of the invention, each lateral leg of said bracket element has a S-shaped profile oriented towards the other lateral leg of said bracket element.

Preferably, each lateral leg of said bracket element has a free end bent in an opposite direction relative to the other lateral leg of said bracket element.

Preferably, said bracket element is made of a spring steel material.

According to an aspect of the invention, said plier assembly further comprises a plurality of spring elements arranged perpendicularly to said second axis and mechanically connecting opposite pairs of contact fingers in such a way to urge said contact fingers against said stationary conductor, when said stationary conductor is received in said coupling cavity.

Preferably, said bracket element is positioned in said clamping cavity above said spring elements.

In a further aspect, the present invention relates to a switching apparatus, according to the following claim 10 and the related dependent claims.

Further characteristics and advantages of the invention will emerge from the description of preferred, but not exclusive embodiments of the switching apparatus, according to invention, non-limiting examples of which are provided in the attached drawings, wherein:
- figure 1 shows a switching apparatus of the withdrawable type including a number of connecting devices according to the invention;
- figure 2 shows an electric pole of the switching apparatus of figure 1;
- figures 3-8 show some views of the connecting device, according to the invention;
- figures 9, 10a-10b show some views of an elastic bracket element included in the connecting device, according to the invention.

### Detailed description of the invention

As mentioned above, the present invention relates to a connecting device 1 of the plier type. The connecting device 1 is particularly suitable for use in medium voltage applications, i.e. operating at voltage levels higher than 2.0 kV AC and 2.5 kV DC up to several tens of kV, for example 72 kV AC and 100 kV DC. In principle, however, the connecting device 1 may be used also in low-voltage applications, i.e. operating at voltage levels lower than 2.0 kV AC and 2.5 kV DC

Referring to the cited figures, in general terms, the connecting device 1 is configured to connect electrically and mechanically a movable conductive terminal 2 of a first electrical system to a stationary conductor 3 of a second electrical system.

For the sake of clarity, it is specified that the terminal 2 is defined as "movable" since it can be moved relative to the stationary conductor 3 while the conductor 3 is defined as "stationary" since it is in a fixed position relative to the movable conductive terminal 2.

Always for the sake of clarity, it is further specified that the terms "connect" or "couple" used in this disclosure generally relate to both an electrical and mechanical connection or coupling of different parts unless otherwise specified.

The connecting device 1 is particularly suitable for use in switching apparatuses (e.g. circuit breakers, contactors, disconnectors and the like), more preferably in switching apparatuses of the withdrawable type. In these applications, the switching apparatus of the withdrawable type constitutes the above-mentioned "first electrical system" while a busbar system of a switchgear or electric line constitutes the above-mentioned "second electrical system". Additionally, a contact arm of said switching apparatus constitutes the above-mentioned "movable conductive terminal" while a busbar of said busbar system constitutes the above-mentioned second "stationary conductor".

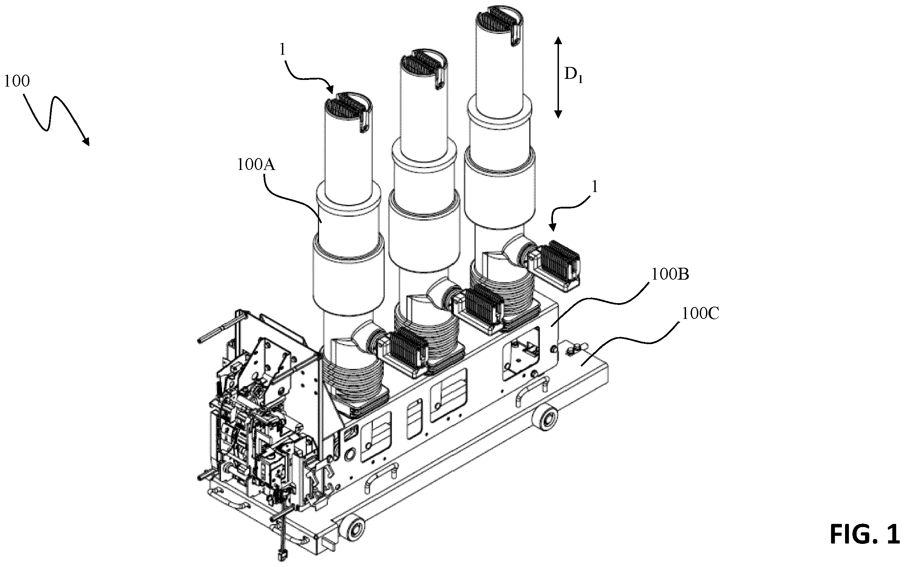

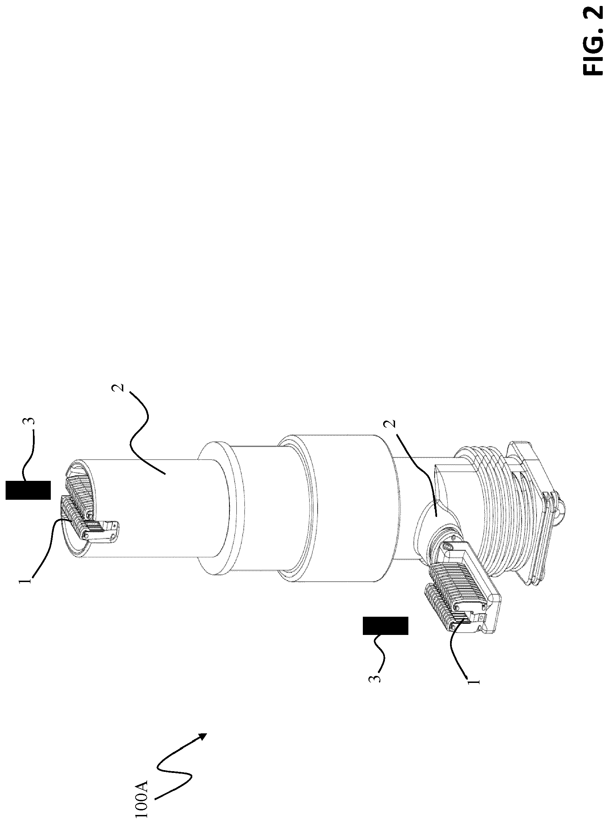

Figures 1-2 relate to a medium voltage switching apparatus 100 of the withdrawable type including a number of connecting devices 1, according to the invention.

The switching apparatus 100 comprises a movable carriage 100C, on which a plurality of electric poles 100A and a basement 100B of the switching apparatus are mounted. The switching apparatus 100 is reversibly movable between an extracted position, at which it is electrically and mechanically disconnected from a corresponding busbar system (not shown in figure 1), and an insertion position, at which they are electrically and mechanically connected to the busbar system. The movement of the switching apparatus during an insertion or extraction manoeuvre may occur along a vertical direction Di (perpendicular to a base plane defined by the carriage 100B as in the example shown in figure 1) or a horizontal direction (parallel to the base plane defined by the carriage 100B) or both.

Each electric pole 100A of the switching apparatus includes upper and lower contact arms 2 electrically connected respectively to corresponding fixed and movable contacts (not shown) arranged internally to the electric pole. On each contact arm 2, a connecting device 1 is fixed to couple electrically and mechanically such a contact arm with a corresponding busbar 3. For the sake of simplicity and without intending to limit the scope of the invention, the connecting device, according to the invention, will be described in the following with particular reference to electrical applications similar to that shown in figures 1-2. In principle, however, the connecting device 1 may be used in switching apparatuses of different type or even in electrical apparatuses not providing switching functionalities.

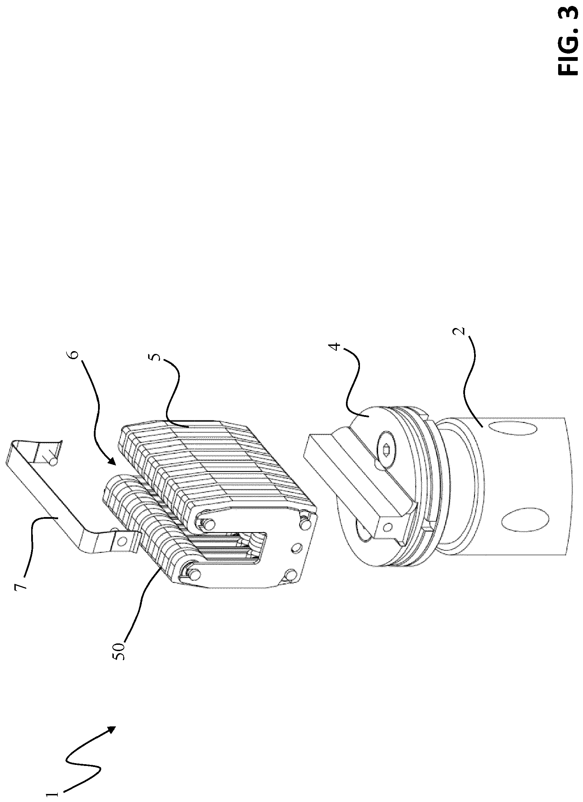

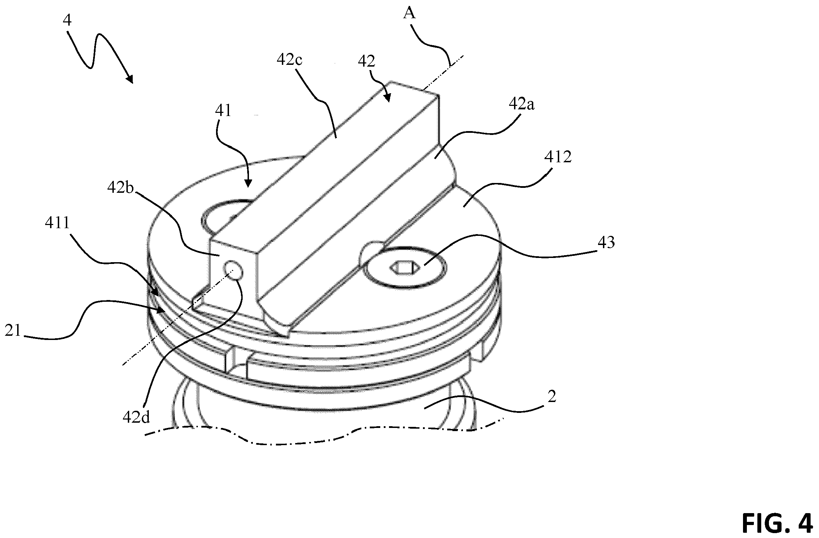

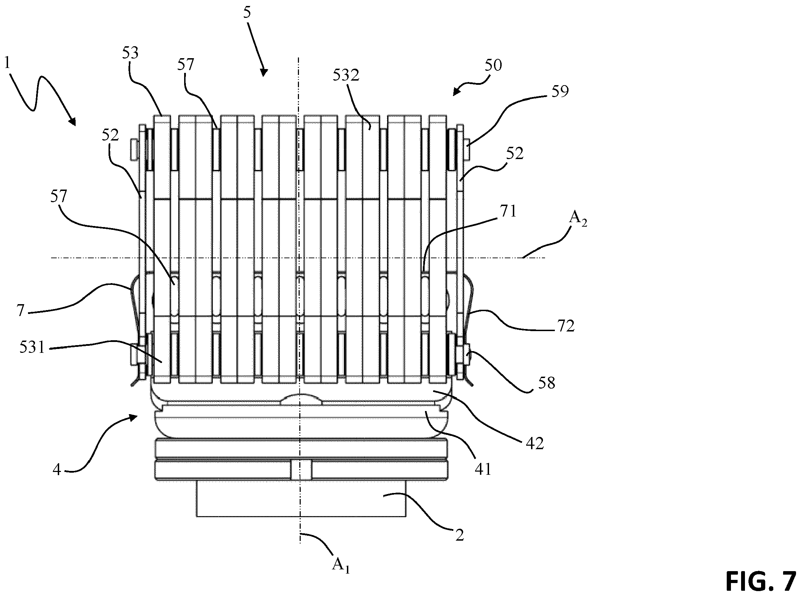

Referring now to figures 3-8, the connecting device 1, according to the invention, comprises a conductive support body 4 fixed to a corresponding movable conductive terminal 2. Preferably, the support body 4 comprises a plate portion 41 having a first surface 411 coupled to a corresponding coupling surface 21 of the movable conductive terminal 2 and a second surface 412, opposite to the first surface 411 (figure 4).

The shape of the plate portion 41 may vary depending on the type of movable conductive terminal 2, on which the support body 4 is fixed. In the embodiment of figures 1-2, for example, the connecting device fixed to the upper contact arm of the electric pole 100A includes a support body having a plate portion of circular shape while the connecting device fixed to the lower contact arm of the electric pole includes a support body having a plate portion of rectangular shape. Obviously, in principle, the plate portion 41 of the support body 4 may have a further profile of different type, according to the needs.

Preferably, the support body 4 is fixed to the movable conductive terminal 2 through suitable fixing screws 43 passing though the thickness of the plate portion 41 and inserted into suitable blind threaded cavities (not shown) of the movable conductive terminal 2.

Preferably, the support body 4 comprises a protruding portion 42 perpendicular to the second surface 412 of the plate portion 41 and having an elongated rectilinear profile extending along a main longitudinal axis A, which is preferably parallel to the plate portion 41. As shown in figure 4, the protruding portion 42 has preferably a parallelepiped-like shape and it has opposite first side surfaces 42a parallel to the main longitudinal axis A, opposite second side surfaces 42b perpendicular to the main longitudinal axis A and a top surface 42c parallel to the main longitudinal axis A (and to the plate portion 41) and perpendicular to the first and second side surfaces 42a, 42b.

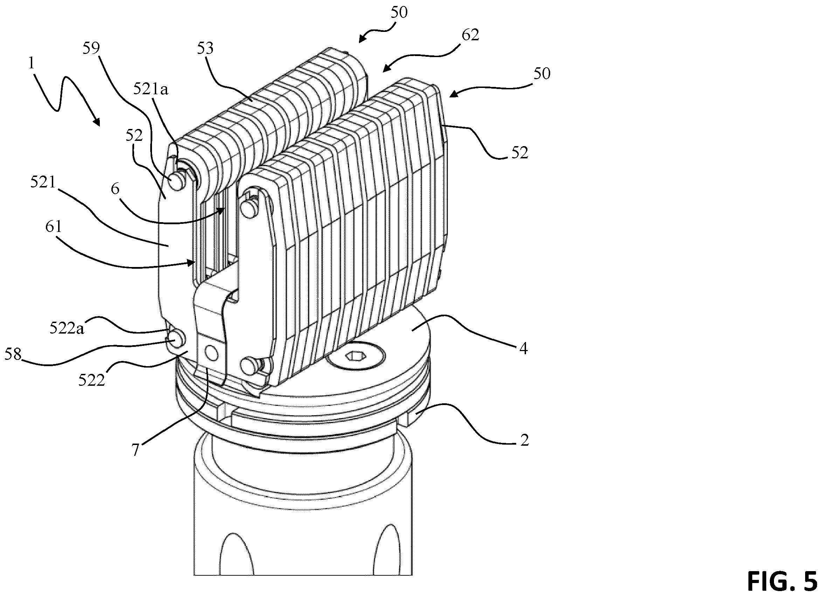

According to the invention, the connecting device 1 comprises a plier assembly 5 mounted on the support body 4 and projecting from this latter in parallel to a first axis A₁, which is preferably perpendicular to the plate portion 41 of the support body (figure 5) (and consequently to the top surface 42c of the protruding portion 42).

The plier assembly 5 defines a coupling cavity 6 configured to receive the above-mentioned stationary conductor, for example when the switching apparatus, on which the connecting device 1 is mounted, is moved in an insertion position with the corresponding busbar system (e.g. through a vertical insertion manoeuvre).

The coupling cavity 6 extends along the first axis A₁ and along a second axis A₂ perpendicular to said first axis. Conveniently, the second axis A₂ of the coupling cavity is defined by the longer dimension of the protruding portion 42 of the support body 4 (figure 5). In other words, the second axis A₂ is parallel to the main longitudinal axis A of the protruding portion 42. According to the invention, the plier assembly 5 comprises a pair of opposite plier groups 50 arranged in parallel to the second axis A₂.

The plier groups 50 are spaced one from another and are arranged in such a way to delimit the coupling cavity 6 at opposite sides parallel to the second axis A₂.

Preferably, the plier groups 50 are arranged along opposite sides of the protruding portion 42 of the support body 4.

The coupling cavity 6 has thus opposite open ends 61, 62 along the second axis A₂ (figures 5-7), in practice at the opposite second sides 42b of the protruding portion 42.

According to the invention, each plier group 50 includes a plurality of conductive contact fingers 53, which are adjacent one to another and arranged in parallel to the second axis A₂. In practice, each plier group 50 includes a row or series of conductive fingers 53 parallel the second axis A₂.

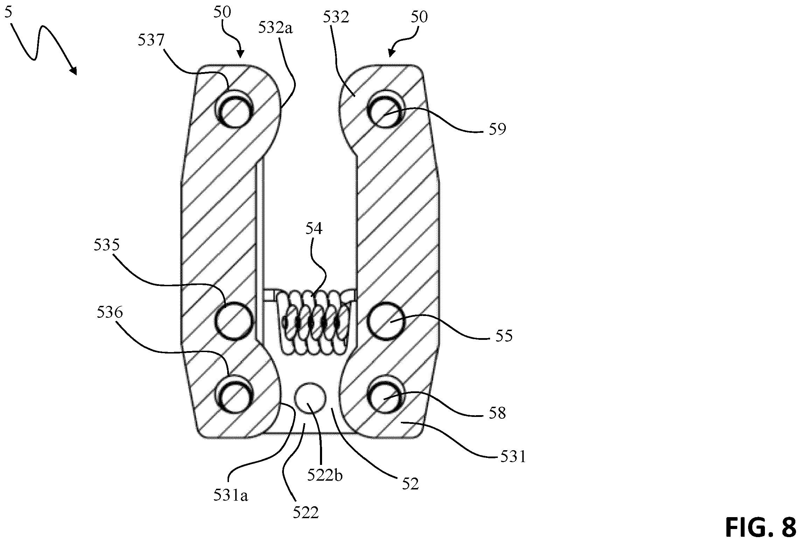

Preferably, each contact finger 53 includes a first end portion 531 resting on the support body 4 and a second end portion 532 opposite to the first end portion 531 and forming a free end of the contact finger. The second end portion 532 of each contact finger 53 couples with the above-mentioned stationary conductor, when this latter is received in the coupling cavity 6. Preferably, the first end portion 531 of each contact finger 53 has a curved coupling surface 531a resting against a corresponding first side surface 42a of the protruding portion 42 of the support body 4 (figures 4 and 8).

Preferably, the second end portion 532 of each contact finger 53 has a bulged surface 532a coming into contact with the above-mentioned stationary conductor, when this latter is received in the coupling cavity 6 (figure 8).

Preferably, each plier group 50 comprises a first support pin 55 passing through the corresponding contact fingers 53 (figure 8). In order to allow the passage of the first support pin 55, each contact finger 53 is provided with a first hole 535 arranged in a proximal position relative to the first end portion 531 of the contact finger.

Each first support pin 55 supports the contact fingers 53 of the corresponding plier group 50 and defines a rotation axis for said contact fingers, which is parallel to the second axis A₂. The contact fingers 53 of each plier group can slightly tilt about the support pin 55, thereby moving relative to the support body 4.

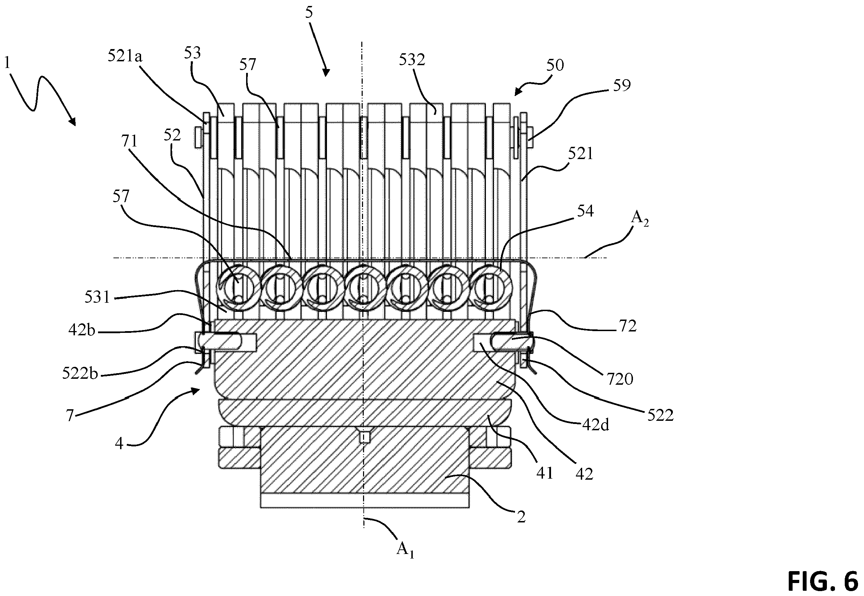

Preferably, the plier assembly 5 comprises a plurality of spring elements 54 arranged perpendicularly to the second axis A₂ and mechanically connecting corresponding opposite pairs of contact fingers 53 of the opposite plier groups 50. The spring elements 54 are arranged in such a way to urge the contact fingers 53 against the above-mentioned stationary conductor, when this latter is received in the coupling cavity 6 (figures 6-7).

Preferably, each spring element 54 is formed by a compression spring mechanically connecting two opposite pairs of contact fingers 53. Conveniently, each compression spring 54 has opposite ends fixed to the support pins 55 passing through opposite contact fingers 53.

When the connecting device 1 is separated from the corresponding stationary conductor 3, each compression spring 54 is in rest or pre-loaded condition. In this situation, the opposite contact fingers 53 are positioned relative one to another in such a way that their second free ends 532 are juxtaposed and mutually spaced of a distance slightly lower than the thickness of the above-mentioned stationary conductor.

When it is received in the coupling cavity 6, the stationary conductor exerts on the opposite contact fingers 53 mechanical forces directed in such a way to separate their juxtaposed second free ends 532, thereby causing a rotation movement (according to opposite directions) of the opposite contact fingers. Each compression spring 54 is thus subject to a compression and it opposes the rotation movement of the contact fingers 53. The second free ends 532 of the opposite contact fingers 53 are thus urged against opposite side surfaces of the stationary conductor.

Preferably, the plier assembly 5 comprises a mounting structure mechanically connecting the plier groups 50 one to another in such a way that the plier assembly 5 forms a single piece. Preferably, such a mounting structure comprises a pair of terminal plates 52 arranged perpendicularly to the second axis A₂ and in parallel to the contact fingers 53.

Each terminal plate 52 has a leg portion 521 for each plier group 50.

The leg portions 521 of each terminal plate are arranged according to V-shape. Each leg portion 521 extends in parallel to the contact fingers 53 of a corresponding plier group 50.

In this way, corresponding leg portions 521 of opposite terminal plates 52 sandwich the contact fingers 53 of a corresponding plier group 50.

Each terminal plate 52 has a base portion 522 joining the leg portions 521 in a proximal position to the support body 4. The joining portion 522 of each terminal plate 52 is preferably configured to rest against a corresponding second side surface 42b of the protruding portion 42 of the support body 4 (figures 4 and 6).

Preferably, the joining portion 522 of each terminal plate 52 is provided with a through hole 522b positioned in such a way to be coaxial with a corresponding connection hole 42d of the protruding portion 42 of the support body (figures 6 and 8).

Preferably, the above-mentioned mounting structure comprises a plurality of spacers 57 inserted between the contact fingers 53 of each plier group 50. The spacers 57 are conveniently arranged at the first and second end portions 531, 532 of the contact fingers 53 (figures 6-7). Preferably, the above-mentioned mounting structure comprises, for each plier group, second and third support pins 58, 59 passing through the contact fingers 53, the spacers 57 and the opposite terminal plates 52 (at the leg portions 521 of these latter).

In order to allow the passage of the second and third support pins 58, 59, each contact finger 53 is provided with a pair of through holes 536, 537 arranged at the opposite end portions 531, 532 (figure 8) and each leg portion 521 of the terminal plates 52 has a pair of through holes 521a, 522a coaxial with the through holes 536, 537 of each contact finger 52. Conveniently, the through holes 536, 537 of each contact finger 53 and the through holes 521a, 522a of the terminal plates 52 have a slotted shape in such a way to allow a movement of the contact fingers 53 relative to the terminal plates 52 (figures 5 and 8).

According to the invention, the connecting device 1 comprises an elastic bracket element 7 securing the plier assembly 5 to the support body 4.

Preferably, the bracket element 7 is made of a spring steel material.

The bracket element 7 comprises an elongated intermediate portion 71 and a pair of lateral legs 72 extending transversally relative to the intermediate portion 71 at a same side of said intermediate portion.

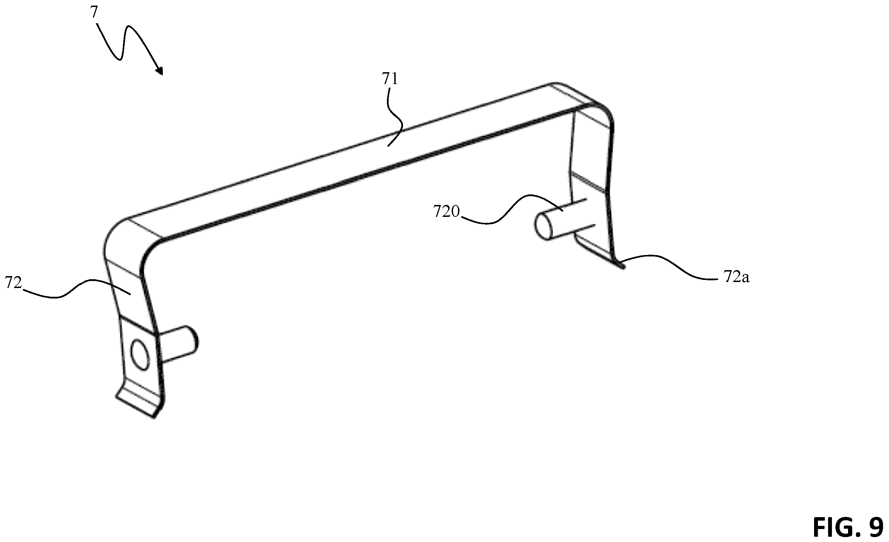

Preferably, the bracket element 7 has a C-shaped profile with the lateral legs 72 extending perpendicularly to the intermediate portion 71 (more precisely according to concordant directions perpendicular to the intermediate portion) at opposite ends of said intermediate portion (figure 9).

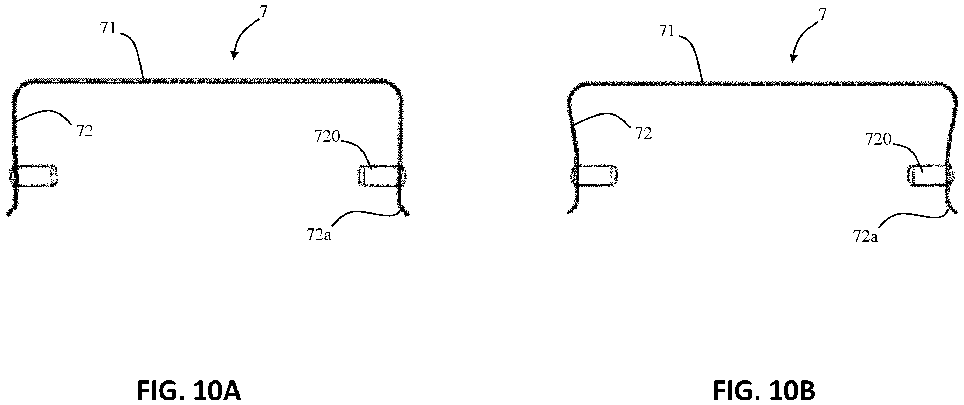

Preferably, the intermediate portion 71 of the bracket element has a rectilinear shape (figures 9, 10a, 10b).

According to some embodiments of the invention (figure 10a), each lateral leg 72 of the bracket element has preferably a rectilinear profile.

According to other embodiments of the invention (figure 10b), each lateral leg 72 of the bracket element has preferably a S-shaped profile oriented towards the other lateral leg of the bracket element.

Preferably, each lateral leg 72 of the bracket element has a bent free end 72a curved in an opposite direction relative to the other lateral leg of the bracket element (figures 9, 10a, 10b).

According to the invention, the bracket element 7 is arranged in the clamping cavity 6 defined by the opposite plier groups 50. In the clamping cavity 6, the bracket element 7 is positioned in such a way that the intermediate portion 71 extends in parallel to the second axis A₂ and the lateral legs 72 stick out of the camping cavity 6, at the opposite open ends 61, 62 of this latter, and are both directed towards the support body 4.

Preferably, the intermediate portion 71 is positioned above the spring elements 54, more preferably in such a way to be in contact with these latter.

According to the invention, each lateral leg 72 of the bracket element 7 is mechanically connected to the support body 4. The bracket element 7 is thus subject to an elastic deformation and it exerts on the plier assembly 5 a mechanical force directed in such a way to urge said plier assembly against the support body 4.

In practice, the bracket element 7 exerts a pushing force on the spring elements 54 of the plier assembly 5, which is directed towards the support body 4. In this way, the plier assembly 5 is secured to the support body 4.

The use of a bracket element 7 to secure the plier assembly 5 to the support body 4 remarkably facilitates the mounting operations of the plier assembly 5.

The bracket element 7 is quite easy to handle even using gloves. Additionally, since is arranged in the clamping cavity 6 of the plier assembly in the way described above, the bracket element 7 can be naturally placed in a correct operating position with a simple manual operation. The probability of positioning errors is thus drastically reduced.

Preferably, each lateral leg 72 of the bracket element 7 is mechanically connected to the support body 4 without the use of screws or similar fastening elements (namely fastening elements requiring the use of a mechanical tool for their arrangement). In this way, the bracket element 7 can be easily mounted or removed, for example during a maintenance operation. According to preferred embodiments of the invention, each lateral leg 72 of the bracket element 7 is mechanically connected to the support body 4 through a pin mechanical connection.

Preferably, each lateral leg 72 of the bracket element 12 is provided with a connection pin 720 protruding towards the other lateral leg of the bracket element, more preferably in proximity of the respective free end 72a.

Preferably, the connection pins 720 are aligned one to another along an axis parallel to the intermediate portion 71.

When the bracket element is mounted in its operating position, each connection pin 720 of the bracket element is inserted into a corresponding connection hole 42d of the support body 4 passing through the through hole 522b of a corresponding terminal plate 52 (figure 6).

As mentioned above, each connection hole 42d of the support body 4 is conveniently positioned on the protruding portion 42, more particularly at the second side surfaces 42b, while each through hole 522b of each terminal plate 52 is positioned at the corresponding joining portion 522.

The above-described solution of the present invention allows obtaining a reliable locking of the plier assembly 5 to the support body 4 as it drastically reduces the probability of disengagement of the bracket element 7, particularly when the assembly formed by the movable connecting terminal 2 and the connecting device 1 is moved away from the corresponding stationary conductor.

As a matter of fact, when the connecting device 1 is decoupled from the corresponding stationary conductor, the intermediate portion 71 of the bracket element 7 is subject to a mechanical force, which is directed towards the above-mentioned stationary terminal. Such a mechanical force arises as the contact fingers 53 are urged against the stationary conductor by the spring elements 54 and they may even have some undesired welding points with said stationary conductor (formed due to an excessive heating of the coupled parts caused by the high currents flowing therethrough).

Due to this mechanical force, the bracket element 7 is subject to an elastic deformation, which makes the intermediate portion 71 bend towards the stationary conductor and the opposite legs 72 bend one towards the other. As a result, each connection pin 720 is pushed inside the corresponding connection hole 42d: This effectively prevents the disengagement of the connection pins 720 from the support body 4.

### Technical advantages of the invention

The connecting device, according to the invention, provides remarkable technical benefits over the state of the art.

The connecting device, according to the invention, is very easy to mount on a corresponding movable conductive terminal and it ensures high levels of reliability in operation.

Experimental tests have shown that the connecting device, according to the invention, may be subject to hundreds of insertion and extractions operations with a stationary conductor without showing the above-mentioned disengagement problems of the related plier assembly. The connecting device, according to the invention, can thus satisfy the most severe IEC standards. The connecting device, according to the invention, facilitates possible substitution interventions of the plier assembly, thereby contributing to reduce the maintenance time and costs of the electrical apparatus on which it is mounted.

The connecting device, according to the invention, is relatively easy and cheap to manufacture at industrial level.

## Claims

1. Connecting device (1) for connecting electrically and mechanically a movable conductive terminal (2) of a first electrical system to a stationary conductor (3) of a second electrical system, said connecting device comprising:
- a conductive support body (4) configured to be fixed to said movable conductive terminal (2);
- a plier assembly (5) mounted on said support body (4) and projecting from said support body (4) in parallel to a first axis (A₁), said plier assembly defining a coupling cavity (6) configured to receive said stationary conductor (3) and extending along said first axis (A₁) and along a second axis (A₂) perpendicular to said first axis,
wherein said plier assembly comprises opposite first and second plier groups (51, 52) arranged in parallel to said second axis (A₂) and spaced one from another in such a way to delimit said coupling cavity (6) at opposite sides parallel to said second axis, wherein each plier group (51, 52) includes a plurality of conductive contact fingers (53) adjacent and parallel one to another,
**characterised in that** said connecting device (1) comprises an elastic bracket element (7) configured to secure said plier assembly (5) to said support body (4),
wherein said bracket element comprises an elongated intermediate portion (71) and a pair of lateral legs (72) extending transversally relative to said intermediate portion, wherein said bracket element (7) is arranged in said clamping cavity (6) with said intermediate portion (71) extending in parallel to said second axis (A₂) and said lateral legs (72) sticking out of said camping cavity (6) at opposite open ends (61, 62) of said clamping cavity and directed towards said support body (4),
wherein each lateral leg (72) of said bracket element (7) is mechanically connected to said support body (4),
wherein said bracket element (7) is elastically deformed upon the mechanical connection to said support body, thereby exerting, on said plier assembly (5), a mechanical force directed in such a way to urge said plier assembly against said support body (4).

2. Connecting device, according to claim 1, **characterised in that** each lateral leg (72) of said bracket element (7) is mechanically connected to said support body (4) through a pin mechanical connection.

3. Connecting device, according to claim 2, **characterised in that** each lateral leg (72) of said bracket element (7) is provided with a connection pin (720) protruding towards the other lateral leg of said bracket element, wherein each connection pin (720) is inserted into a corresponding hole (42d) of said support body (4).

4. Connecting device, according to one of the previous claims, **characterised in that** said bracket element (7) has a C-shaped profile.

5. Connecting device, according to one of the previous claims, **characterised in that** each lateral leg (72) of said bracket element (7) has a rectilinear profile.

6. Connecting device, according to one of the claims from 1 to 4, **characterised in that** each lateral leg (72) of said bracket element (7) has a S-shaped profile oriented towards the other lateral leg of said bracket element.

7. Connecting device, according to one of the previous claims, **characterised in that** each lateral leg (72) of said bracket element (7) has a free end (72a) bent in an opposite direction relative to the other lateral leg of said bracket element.

8. Connecting device, according to one of the previous claims, **characterised in that** said bracket element (7) is made of a spring steel material.

9. Connecting device, according to one of the previous claims, **characterised in that** said plier assembly (5) further comprises a plurality of spring elements (54) arranged perpendicularly to said second axis (A₂) and mechanically connecting opposite pairs of contact fingers (53) in such a way to urge said contact fingers (53) against said stationary conductor (3), when said stationary conductor is received in said coupling cavity (6), wherein said bracket element (7) is positioned in said clamping cavity (6) above said spring elements (54).

10. A switching apparatus **characterised in that** it comprises one or more connecting devices (1), according to one of the previous claims.

11. A switching apparatus, according to claim 10, **characterised in that** said switching apparatus is configured to operate at medium voltage levels.

12. A switching apparatus, according to one of the claims from 10 to 11, **characterised in that** said switching apparatus is of the withdrawal type.
